# FASCICULE DE BREVET EUROPEEN

(11) **EP 3 448 555 B1**
(45) Date de publication et mention de la délivrance du brevet: **23.12.2020**
(21) Numéro de dépôt: 17723451.5
(22) Date de dépôt: 21.04.2017
(51) Int. Cl.: B01J 20/24, B01J 20/26, B01J 20/28, B01J 20/30, B01J 20/10, C09K 3/32

(54) **COMPOSITION SOLIDE DE DÉPOLLUTION, SON PROCÉDÉ D'OBTENTION ET SES UTILISATIONS**
FESTE DEKONTAMINATIONSZUSAMMENSETZUNG, VERFAHREN ZUR GEWINNUNG DAVON UND VERWENDUNGEN DAVON
SOLID DECONTAMINATION COMPOSITION, METHOD FOR OBTAINING SAME, AND USES THEREOF

(30) Priorité: 25.04.2016 FR 1653618; 04.11.2016 FR 1660716
(43) Date de publication de la demande: 06.03.2019
(73) Titulaire: PREVOR INTERNATIONAL, 75015 Paris (FR)
(72) Inventeur: BLOMET, Joël, 95760 VALMONDOIS (FR); MEYER, Marie-Claude, 75015 PARIS (FR)
(74) Mandataire: Plasseraud IP
(86) Numéro de dépôt international: PCT/FR2017/050950
(87) Numéro de publication internationale: WO 2017/187060

(56) Documents cités:
- FR-A1- 2 998 578
- US-A1- 2004 025 798
- US-A1- 2009 163 888
- US-A1- 2011 174 228

## Description

### Domaine de l'invention

La présente invention concerne une composition de dépollution, et son utilisation pour lutter contre les pollutions chimiques provoquées par des déversements intempestifs de liquides de toute sorte.

Dans notre environnement, nous sommes aujourd'hui de plus en plus exposés aux pollutions chimiques.

En cas d'accident, ces polluants chimiques posent potentiellement des problèmes de pollution et de sécurité à différentes échelles. Par exemple, un accident routier d'un camion transportant des matières premières toxiques ou dangereuses peut provoquer une pollution environnementale ou des dégâts sur la route. Dans l'industrie ou dans le laboratoire, une erreur de manipulation d'un bidon contenant une matière première toxique ou dangereuse peut provoquer des blessures du personnel ou l'endommagement de dispositifs. La maîtrise rapide des pollutions est donc primordiale dans de nombreuses situations. Dans de tels cas d'urgence, il est préférable de disposer d'un produit qui puisse absorber et neutraliser, de façon irréversible, tout type de liquide polluant et qui puisse ainsi déclassifier certains acides et bases constituant ledit liquide polluant en déchets non dangereux.

### L'art antérieur

De nombreuses compositions polyvalentes sont utilisées pour lutter contre des pollutions chimiques.

Des minéraux naturels desséchés, tels que la sépiolite, la terre de diatomée, le sable ou la vermiculite ont été utilisés conventionnellement. Cependant, ces minéraux génèrent des quantités importantes de déchets à stocker ou à traiter et sont peu valorisables énergétiquement. De plus, de tels minéraux naturels desséchés présentent souvent une faible part de silice cristalline qui a été reconnue cancérigène par l'IARC (International Agency for Research on Cancer).

La sciure de bois est également utilisée. Cependant, ses poussières sont considérées par l'IARC comme étant des particules cancérigènes de classe 1. En outre, la sciure de bois réagit avec l'acide sulfurique pour former une huile noire collante dont il est difficile de se débarrasser.

Les compositions absorbantes comprenant de l'acide silicique amorphe (Chemizorb®) ont connu un important développement au cours de ces dernières années. Cependant, de grandes quantités de ces compositions sont nécessaires pour absorber le liquide et le produit laisse une fine pellicule liquide sur le sol.

Une composition comprenant un polymère super absorbant et de la silice a aussi été mise sur le marché sous la marque Unisafe®. Cette composition n'implique pas de réaction dangereuse mais est assez coûteuse et le produit résultant laisse une fine pellicule de liquide sur le sol.

Un composé comprenant de l'acide silicique amorphe ainsi qu'un agent dérivé du bois a également été commercialisé par la société Prevor. Cet absorbant est efficace et laisse un sol sans résidu liquide mais a tendance à provoquer une gêne pour son utilisateur. En effet, de par sa faible granulométrie, énormément de poussières sont mises en suspension lors de son utilisation ce qui peut provoquer un inconfort au niveau des voies respiratoires de l'utilisateur. De plus, de par sa faible granulométrie, ce type de composition est très volatile et donc très sensible au vent ce qui rend très difficile son utilisation en extérieur. 998 578 A1 divulgue également une composition de dépollution comprenant au moins un gel de silice, et au moins un agent absorbant dérivé du bois, qui peut être choisi parmi la sciure de bois, les copeaux de bois, la poudre de bois, la paille broyée, le maïs broyé, la cellulose, l'hémicellulose, la lignine et leurs mélanges.

Ainsi, à ce jour, il n'existe pas de composition de dépollution qui à la fois :
(1) soit non irritante,
(2) permette une absorption des polluants liquides de tous types,
(3) ne soit pas nocive ou dangereuse lors de son utilisation,
(4) forme avec le polluant un résidu facile à ramasser,
(5) ne laisse pas de résidu sur le sol,
(6) permettre une dépollution et un ramassage des résidus obtenus à un faible coût,
(7) ne gêne pas le confort de l'utilisateur lors de son utilisation,
(8) puisse être utilisée en extérieur,
(9) permette de neutraliser si besoin le liquide polluant absorbé, et
(10) puisse transformer de façon irréversible certains acides et bases constituant ledit liquide polluant en déchets non dangereux, en particulier en déchets industriels banaux (DIB).
En effet, ces dix critères peuvent être contradictoires. Or, les présents inventeurs ont eu le mérite de trouver une composition de dépollution de granulométrie souhaitée qui présente un excellent compris entre ces différents critères (1)-(10).

### Résumé de l'invention

Ainsi, l'invention porte sur une composition solide comprenant:
(a) au moins un gel de silice amorphe,
(b) au moins un agent cellulosique,
(c) au moins un agent liant, et
(d) éventuellement au moins un agent neutralisant, et caractérisée en ce qu'elle présente une granulométrie de 100 µm à 2 mm,
l'agent cellulosique étant de la cellulose,
l'agent liant étant choisi dans le groupe constitué de l'hypromellose,
du carboxyméthyl cellulose de sodium, de la polyvinylpyrrolidone, du polyéthylène glycol et de la gélatine, et leurs mélanges, et
l'agent liant étant présent en une quantité de 1 à 20% en poids par rapport au poids total de ladite composition. Est également divulgué un procédé de fabrication de ladite composition qui comprend une étape de granulation par voie humide du gel de silice amorphe, de l'agent cellulosique, optionnellement d'au moins un agent neutralisant et optionnellement d'au moins un additif, en présence de l'agent liant. L'invention porte aussi sur un procédé de dépollution mettant en œuvre ladite composition et comprenant les étapes suivantes :
(1) ajouter la composition sur un liquide polluant ;
(2) attendre jusqu'à l'absorption du liquide polluant ;
(3) éventuellement, vérifier le pH du résidu obtenu à l'étape 2 ;
(4) répéter les étapes 1 à 3 jusqu'à l'absorption complète du liquide polluant et la formation d'un résidu solide ; et
(5) ramasser le résidu.
Elle porte aussi sur l'utilisation de ladite composition pour absorber les déversements de peintures, de lasures, de produits chimiques tels que les acides et les bases, d'huiles, d'hydrocarbures, de solvants et de produits aqueux.
Des exemples de solvants comprennent mais ne sont pas limités à l'eau, l'éthanol, le benzène, l'hexane, le cyclohexane, le dichlorométhane, le chloroforme, le tétrahydrofurane, le toluène, l'acétone, l'acétonitrile, l'acétate d'éthyle, l'éther éthylique, le pentane, le diméthylsulfoxyde (DMSO), le diméthylformamide (DMF), le xylène et leurs mélanges.

### Descriptif détaillé

La composition selon l'invention est une composition solide comprenant :
(a) au moins un gel de silice amorphe,
(b) au moins un agent cellulosique,
(c) au moins un agent liant, et
(d) éventuellement au moins un agent neutralisant, et
caractérisée en ce qu'elle présente une granulométrie de 100 µm à 2 mm, l'agent cellulosique étant de la cellulose, l'agent liant étant choisi dans le groupe constitué de l'hypromellose, du carboxyméthyl cellulose de sodium, de la polyvinylpyrrolidone, du polyéthylène glycol et de la gélatine, et leurs mélanges, et l'agent liant étant présent en une quantité de 1 à 20% en poids par rapport au poids total de ladite composition. Les mesures de granulométrie sont réalisées par tamisage par vibration.

La composition selon l'invention est une composition de dépollution, c'est-à-dire une composition qui permet l'absorption complète de polluants chimiques et leur rétention.

Par « absorber » et par « absorption », on entend amener à l'état solide le polluant se présentant initialement sous une forme liquide en le mélangeant avec la composition de dépollution.

La composition de la présente invention se présente sous une forme solide granulée, elle peut donc facilement être répandue autour ou sur le liquide polluant. Plus petite est la quantité nécessaire pour absorber le liquide polluant, plus efficace sera ladite composition.

La composition de dépollution selon l'invention permet d'absorber les liquides en utilisant une quantité minimum de produit et à un coût inférieur par rapport aux produits de l'état de la technique.

La capacité d'absorption d'un composé (ou de la composition de dépollution) est exprimée en L/Kg et correspond à la quantité en poids de composé (ou de la composition de dépollution) qu'il est nécessaire d'ajouter à 1L d'eau pour que le mélange résultant soit complètement transformé en une forme solide.
On peut donc la mesurer de la façon suivante :
1) 1L d'eau est mis dans un récipient, de préférence en verre;
2) Une quantité déterminée de la composition de la présente invention est ajoutée dans ledit récipient;
3) Une fois le mélange homogénéisé, l'état (liquide ou solide) du mélange est vérifié. Les étapes 1) et 2) sont répétées jusqu'à l'obtention d'un résidu solide;
4) La quantité en kg de composé ou de composition de dépollution ajoutée correspond à la capacité d'absorption dudit composé ou de ladite composition en kg/L.
Ladite composition peut présenter une capacité d'absorption de 1 L à 5 L pour 1 kg de ladite composition, de préférence de 1.5 L à 4.5 L pour 1 kg de ladite composition, et plus préférentiellement de 2 L à 4 L pour 1 kg de ladite composition.
La composition selon l'invention permet également de neutraliser si besoin le liquide polluant absorbé.
Par « neutraliser », on entend amener le pH du mélange de polluant/composition de dépollution, à une valeur de 5,5 à 9, même de 6 à 8, et notamment 7.
Ainsi, dans un mode de réalisation préféré, la composition selon l'invention comprend également un agent neutralisant qui permet d'amener le pH du résidu final à un pH au voisinage du pH neutre, et ce de façon irréversible.
Le résidu obtenu après l'application de ladite composition sur le liquide ayant provoqué la pollution doit être facile à ramasser. Par « facile à ramasser », on entend le fait que les caractéristiques du résidu obtenu sont telles qu'il n'y a pas de difficulté technique particulière lors de son ramassage, et que l'opération de ramassage peut être effectuée par des moyens couramment usités par l'homme du métier. Ainsi, le résidu obtenu par utilisation de la composition selon l'invention n'est ni visqueux ni collant, et se présente sous une forme d'un gel solide, qui peut donc facilement être retiré par des moyens couramment utilisés par l'homme du métier, tels que par exemple à l'aide d'une pelle ou par aspiration, etc., sans laisser de résidu collé à la surface sur laquelle le liquide s'était répandu, mais en laissant un sol particulièrement sec et non glissant.

La composition de la présente invention n'est pas dangereuse au sens du code de l'environnement (non toxique, non irritante, non allergisante, et non écotoxique), contrairement à certains produits actuellement commercialisés. Ainsi, la composition selon la présente invention ne contient aucun ingrédient nécessitant un étiquetage particulier.

De plus, lors de son utilisation, la composition n'a pas d'effet nocif ou dangereux. Elle peut donc être manipulée sans risque. Quand elle entre en contact avec des polluants acides ou basiques peu concentrés, elle ne conduit pas à une réaction trop exothermique, c'est-à-dire à un niveau où l'élévation de température endommagerait le milieu environnant.

Par ailleurs, il n'y a pas de dégagement de gaz toxique lié à la réaction de la composition avec le produit chimique déversé.

Du fait de la quantité minimale de ladite composition mise en œuvre, le coût total de la dépollution est faible. Il est à noter que le coût total de dépollution consiste non seulement au coût des matières premières et de la fabrication de la composition, mais aussi au coût des opérations de ramassage et de stockage ou traitement des résidus (incinération notamment), d'où l'intérêt d'obtenir un déchet facile à ramasser et en quantité massique réduite. Or, de par sa grande capacité absorbante, la quantité de composition de dépollution utilisée pour lutter contre la pollution chimique est faible. C'est une quantité minime et donc une masse minime de déchet formé, qui devra être stockée et/ou traitée. En outre, en comparaison avec les produits actuellement commercialisés, la composition selon l'invention présente une capacité d'absorption bien plus élevée.
La composition présente également l'avantage d'avoir une granulométrie maitrisée. La granulométrie de la composition est un paramètre des plus importants car lorsque la granulométrie de la composition est trop fine (<100µm), les particules mises en suspension sont considérées comme des poussières et peuvent donc être inhalées.
Plus la granulométrie est faible, plus la poussière est dangereuse car les particules vont pénétrer plus profondément dans l'organisme.
- Ainsi entre 10 et 100 µm, les particules sont appelées poussières totales, elles seront retenues au niveau des fosses nasales.
- De 5 à 10 µm, les poussières pénètrent dans la trachée, les bronches puis les bronchioles.
- De 0.5 à 5 µm, ce sont des poussières très fines qui se déposent sur les alvéoles pulmonaires.
- En dessous de 0,5 µm, les poussières se comportent comme un gaz dans l'organisme et suivent donc la ventilation pulmonaire.
Une granulométrie élevée permet donc d'éviter la formation de poussières et augmente ainsi le confort et la sécurité de l'utilisateur.
En outre, une granulométrie maîtrisée permet d'éviter que le produit ne soit trop volatile, il devient alors moins sensible au vent et peut être utilisé en extérieur. Par exemple, la norme allemande DWA-A 716-9 requiert une composition d'une granulométrie supérieure à 355 µm pour que celui-ci puisse être utilisé sur les routes.
La granulométrie de ladite composition est de 100 µm à 2 mm. Ainsi, la composition n'est pas inhalée et ne pénètre pas dans les voies respiratoires de son utilisateur. Le confort et la sécurité de l'utilisateur sont donc améliorés. En outre, la composition de l'invention peut être utilisée en extérieur et dans différentes applications.

Selon un mode de réalisation particulier, la composition présente une granulométrie de 160 µm à 355 pm.

Selon un autre mode de réalisation particulier, la composition présente une granulométrie de 160 µm à 1 mm

Selon un autre mode de réalisation particulier, la composition présente une granulométrie de 355 µm à 2 mm.

La composition de la présente invention permet également de transformer de façon irréversible certains acides et bases constituant ledit liquide polluant et donc de déclassifier le résidu formé en un déchet non dangereux, en particulier en un déchet industriel banal (DIB). Ainsi, le coût de retraitement des déchets est réduit et la sécurité des employés manipulant les résidus formés après absorption du liquide polluant avec la composition de dépollution est renforcée.

Dans un mode de réalisation particulier, l'utilisation d'agents indicateurs de pH, dans ladite composition de dépollution permet de s'assurer que le déchet obtenu est un déchet DIB.
Ainsi, dans un mode de réalisation particulier, si le résidu formé après absorption du liquide polluant est devenu de la couleur indiquant la neutralité acido-basique, c'est-à-dire jaune, alors le résidu est un déchet DIB.

Des exemples de polluants adaptés à un reclassement en DIB comprennent certains produits chimiques acido-basiques uniquement corrosifs ou irritants et qui ne sont ni inflammables, ni toxiques et ni classifiés comme agents CMR.

Des exemples de produits chimiques acido-basiques adaptés à un reclassement en DIB comprennent, mais ne sont pas limités à, des acides tels que l'acide chlorhydrique, l'acide sulfurique et l'acide acétique, et des bases telles que la soude caustique, la potasse caustique et la chaux liquide.

L'intérêt de cette invention est donc d'obtenir une composition permettant une absorption efficace, à faible coût, polyvalente, sans danger, utilisable quel que soit l'environnement extérieur, qui ne provoque pas de gêne pour son utilisateur et qui permette de transformer de façon irréversible certains liquides acides ou basiques polluants en déchets DIB une fois absorbés par ladite composition de dépollution.
Selon un mode de réalisation particulier de la présente invention, ladite composition présente une masse volumique de 125 à 275 g/L, de préférence de 150 à 250 g/L et encore plus préférentiellement de 160 à 240 g/L.

### (a) Gel de silice amorphe

Le gel silice amorphe mis en œuvre dans la composition selon l'invention est un polymère de silice synthétique amorphe préparé à partir de silicate de sodium. Le gel de silice amorphe est notamment connu comme un additif alimentaire dénommé E551.
Les grains de gel de silice amorphe sont poreux. La structure spécifique du gel de silice amorphe permet à la fois d'absorber le liquide à dépolluer et de donner un résidu non collant et facile à ramasser.
Selon un mode de réalisation particulier de la présente invention, ledit gel de silice amorphe présente une granulométrie de 60 à 500 µm, de préférence de 120 à 400 µm et encore plus préférentiellement de 150 à 300 µm. Ledit gel de silice amorphe présente aussi une masse volumique de 150 à 400 kg/m³, de préférence de 200 à 380 kg/m³, et encore plus préférentiellement de 250 à 350 kg/m³. Une telle granulométrie et une telle masse volumique permettent d'obtenir la meilleure efficacité de dépollution.
Ainsi, ledit gel de silice amorphe présente une capacité d'absorption de 1L à 10L pour 1 Kg, et de préférence de 2L à 4L pour 1 Kg.
Un tel gel de silice amorphe est commercialisé par exemple sous la marque Tixosil (notamment Tixosil 68®) produite par Solvay, Upasil (notamment Upasil 60®) produite par Upagchem. On peut également utiliser du gel de silice pour chromatographie vendu par Aldrich, VWR, Accros. Tixosil 68® absorbe environ 3 fois son poids en liquide et est relativement peu coûteux. Upasil 60® absorbe environ 2 fois son poids en liquide. Les gels de silice pour chromatographie absorbent entre 1,5 et 2,5 fois leur poids suivant leur porosité.
Le Tixosil 68® se caractérise par sa faible granulométrie.
Selon un mode de réalisation particulier de la présente invention, ledit gel de silice amorphe est présent en une quantité de 5 à 90%, de préférence de 30 à 85% et encore plus préférentiellement de 50 à 80% en poids par rapport au poids total de ladite composition.

### (b) Agent cellulosique

L'agent cellulosique mis en œuvre dans la composition selon l'invention est de la cellulose. Selon un mode de réalisation particulier de la présente invention, ledit agent cellulosique provient du bois, de la paille ou du coton. A titre d'exemple, l'agent cellulosique est choisi parmi Jelucel HM 300® et Jelucel HM 200®.
Jelucel HM 300® est de la cellulose pure (CAS : 9004-34-6) de très faible granulométrie.
L'agent cellulosique mis en œuvre dans la composition n'est pas irritant et ne dégage pas de gaz nocif lors de son utilisation. La cellulose n'est pas un produit classé comme cancérigène même sous forme de poussières. Elle se distingue donc des autres produits issus du bois tels que la sciure de bois, les copeaux de bois et la poudre de bois dont les poussières sont classées CMR classe 1 par l'IARC.
L'agent cellulosique de la présente invention permet d'absorber avec efficacité tout type de liquide pour un coût très faible et particulièrement les produits carbonés. En revanche, il a tendance à former une pâte collante au sol lors de la dépollution, et réagit notamment avec l'acide sulfurique pour former une huile noire et collante via une réaction exothermique. Son utilisation seule n'est pas recommandée.
La cellulose utilisée a été choisie en fonction de sa granulométrie et donc de sa capacité à se granuler. Si la granulométrie de la cellulose est trop faible alors les risques d'explosion de poudre sont très importants. Si la granulométrie de la cellulose est trop élevée alors celle-ci forme des agglomérats de fibres qui se délitent mal et il est donc très difficile d'obtenir une poudre homogène.
Jelucel HM 200® présente une granulométrie plus faible que Jelucel HM 300®. Jelucel HM 300® présente des capacités d'absorption légèrement supérieures à celles de Jelucel HM 200®.
La granulométrie des différentes celluloses susceptibles d'être utilisées est mesurée par tamisage sous flux d'air.
Selon un mode de réalisation particulier de la présente invention, ledit agent cellulosique présente une granulométrie de 0 à 400 µm, de préférence de 0 à 300 µm.
Selon un mode de réalisation particulier de la présente invention, ledit agent cellulosique est présent en une quantité de 2 à 60%, de préférence de 10 à 55% et encore plus préférentiellement de 15 à 45% en poids par rapport au poids total de ladite composition.

### (c) Agent liant

La composition selon l'invention comprend également un agent liant qui est choisi dans le groupe constitué de l'hypromellose et le carboxyméthyl cellulose de sodium; de la polyvinylpyrrolidone, du polyéthylène glycol et de la gélatine, et leurs mélanges.
En particulier, l'agent liant est l'Hypromellose (ou Hydroxypropyl methylcellulose, HPMC, E464) qui est un polymère issu de la cellulose qui sert de liant pour la granulation. L'hypromellose est par exemple commercialisée sous le nom Arbocel CE 2910 HE 50 LV®. L'Hypromellose est un agent liant non-irritant et avantageux compte tenu de son coût faible, sa capacité à former des grains solides et non friables, sa solubilité élevée dans l'eau et sa résistance à de nombreux produits chimiques.
La quantité d'agent liant doit être optimisée pour obtenir une granulation efficace. Si la quantité d'agent liant ajoutée est trop faible (<1% en masse), alors les grains seront trop friables et se déliteront lorsqu'ils seront soumis à des vibrations (par exemple les vibrations dues au transport). Si la quantité d'agent liant ajoutée est trop élevée (>20% en masse) alors le coût de fabrication de la composition devient trop élevé.
Selon la présente invention, ledit agent liant est présent en une quantité de 1 à 20%, de préférence de 2 à 10%, et encore plus préférentiellement de 3 à 8% en poids par rapport au poids total de ladite composition.

### (d) Agent neutralisant

Par « agent neutralisant », on entend un composé capable de changer le pH de son milieu environnant en un pH de 5,5 à 9, même de 6 à 8, et notamment 7.
La capacité de neutralisation d'un composé (ou d'une composition), exprimée en g/mol, correspond à la quantité en masse dudit composé (ou de ladite composition) qu'il est nécessaire d'ajouter à 1 mole d'acide fort ou de base forte pour que le pH résultant soit de 5,5 à 9, préférentiellement de 6 à 8, et encore plus préférentiellement d'environ 7.
Les agents neutralisants pour des liquides acides, sont des bases dont un pKa est de 7 à 13, de préférence de 8 à 12, et plus préférentiellement de 9 à 10.
Les agents neutralisants pour des liquides basiques, sont les acides dont un pKa est de 2 à 7, et de préférence de 3 à 6, et plus préférentiellement de 4 à 5.
Selon un mode de réalisation particulier de la présente invention, ledit agent neutralisant est choisi parmi le bicarbonate de sodium, le bicarbonate de potassium, le citrate disodique, le carbonate de calcium, le carbonate de magnésium, l'oxyde de magnésium, le citrate de sodium tel que le citrate de sodium monobasique, les acides aminés et leurs sels, tels que la glycine, l'acide glutamique, le glutamate de sodium, la glutamine sodique, l'acide succinique, et leurs mélanges. On préfère utiliser le carbonate de calcium, le citrate de sodium monobasique et leurs mélanges.
En cas de dépollution de liquides acides, on peut utiliser notamment le carbonate de calcium, le carbonate de magnésium, l'oxyde de magnésium, les sels d'acides aminés et leurs mélanges. On préfère utiliser le carbonate de calcium.
En effet, le carbonate de calcium est préféré car il a un pouvoir neutralisant élevé de 20 mol/kg, il n'est pas irritant et n'est pas cher.
Le carbonate de magnésium peut être utilisé mais il présente un pouvoir neutralisant moins satisfaisant que le carbonate de calcium car la cinétique de réaction est plus lente et le produit résultant a une texture qui le rend difficile à ramasser.
L'oxyde de magnésium est irritant, et les sels d'acides aminés sont plus chers que le carbonate de calcium, c'est pourquoi, ils peuvent être utilisés mais ne sont pas préférés.
En cas de dépollution de liquides basiques, on peut utiliser notamment le citrate de sodium, les acides aminés tels que la glycine ou l'acide glutamique et leurs sels tels que le glutamate de sodium monobasique, l'acide succinique, et leurs mélanges. Le citrate de sodium monobasique est préféré.
Selon un mode de réalisation particulier de la présente invention, ledit agent neutralisant est présent en une quantité de 0 à 85%, de préférence de 1 à 60%, et encore plus préférentiellement de 15 à 40% en poids par rapport au poids total de ladite composition.

### (e) Additifs

Selon un mode de réalisation particulier de la présente invention, ladite composition peut comprendre en outre au moins un additif choisi parmi les agents indicateurs de pH, colorants, parfums, agents facilitant l'écoulement, agents gonflants, désintégrants et leurs mélanges.
Selon un mode de réalisation particulier de la présente invention, les additifs sont présents en une quantité de 0 à 5%, de préférence de 0,001 à 2% et encore plus préférentiellement de 0,05 à 1% en poids par rapport au poids total de ladite composition.

### Agent indicateur de pH

Par « agent indicateur de pH », on entend des composés qui ont la capacité de changer de couleur en fonction du pH de leur milieu environnemental.

Des exemples d'indicateurs de pH sont le bleu de thymol, la tropaeoline, le pourpre de bromocrésol, le bleu de bromophénol, le rouge neutre, la phénolphtaléine, le thymolphtaléine, le jaune d'alizarine R, le bleu de bromothymol, le rouge de crésol, le méthyle violet, le vert malachite, le jaune de méthyle, le rouge congo, le méthyle orange, le vert de bromocrésol, le rouge de méthyle, le rouge de phénol, l'alizarine, le carmin d'indigo, et leurs mélanges.

Ainsi, selon un mode de réalisation particulier de la présente invention, la composition comprend en outre au moins un agent indicateur de pH choisi parmi le tropaeoline, le bleu de thymol, le pourpre de bromocrésol, le bleu de bromophénol, le rouge de congo, le rouge neutre, la phénolphtaléine, le thymolphtaléine, le jaune d'alizarine R, et leurs mélanges.

La présence d'agent indicateur de pH permet de vérifier rapidement le pH du résidu et de prendre les précautions nécessaires à la manipulation du résidu formé et également de s'assurer que le déchet peut être considéré comme un DIB.

Dans un mode de réalisation particulier, lorsque la composition selon l'invention comprend un agent neutralisant, elle comprend également un agent indicateur de pH.

### Colorant

A titre d'exemple de colorant, on peut citer tout colorant dépourvu de toxicité, par exemple de qualité alimentaire. En particulier, on peut citer le bleu patenté V, la Carmoisine, etc.

### Parfum

Les parfums peuvent être d'origine naturelle, tels que les huiles essentielles de fleurs, de fruits, l'écorce de bois (cannelle, santal), de la résine (encens, myrrhe), etc. On peut également utiliser des parfums synthétiques, tels que la vanilline.

### Agent d'écoulement

Afin de faciliter l'épandage de la composition selon l'invention, celle-ci peut inclure des agents d'écoulement. A titre d'exemples de tels agents, on peut citer du sable, de la tourbe, etc.

### Agent gonflant

Afin d'augmenter la capacité d'absorption de solutions aqueuses, des polymères super-absorbants de type polyacrylate de sodium, polyacrylate de potassium ou polyamide ou des copolymères à bloc de ce type peuvent être ajoutés à la composition. A titre d'exemples de produits commerciaux utilisables, on peut citer Aquakeep® et Tramfloc® notamment.

### Désintégrant

Les désintégrants sont des produits additionnels qui aident les granules à se déliter lorsqu'elles sont mises au contact d'un liquide.
Ces désintégrants peuvent, entre autre être: de l'amidon prégélatinisé, de la Carboxymethylcellulose de sodium réticulée (croscamellose) ou de la PVP réticulée (crospovidone).
Selon un mode de réalisation particulier, la composition selon l'invention comprend:
- de 40 à 90%, de préférence de 50 à 85% et encore plus préférentiellement de 55 à 80% en poids par rapport au poids total de ladite composition de gel de silice amorphe ;
- de 5 à 60%, de préférence de 10 à 55% et encore plus préférentiellement de 15 à 45% en poids par rapport au poids total de ladite composition d'agent cellulosique ;
- de 2 à 10%, de préférence de 3 à 8% en poids par rapport au poids total de ladite composition d'agent liant ; et
- de 0 à 5%, de préférence de 0,001 à 2% et encore plus préférentiellement de 0,05 à 1% en poids par rapport au poids total de ladite composition d'au moins un additif.
Selon un autre mode de réalisation particulier, la composition selon l'invention comprend :
- de 70 à 80%, de préférence de 74 à 77%, et encore plus préférentiellement environ 76% en poids par rapport au poids total de ladite composition de gel de silice amorphe ;
- de 15 à 25%, de préférence de 18 à 20%, et encore plus préférentiellement environ 19% en poids par rapport au poids total de ladite composition d'agent cellulosique ;
- de 2 à 10%, de préférence 3 à 8%, et encore plus préférentiellement environ 5% en poids par rapport au poids total de ladite composition d'agent liant, et
- de 0 à 5%, de préférence de 0,001 à 2% et encore plus préférentiellement de 0,05 à 1% en poids par rapport au poids total de ladite composition d'au moins un additif.

Selon un autre mode de réalisation particulier, la composition selon l'invention comprend :
- de 50 à 65%, de préférence 55 à 60%, et encore plus préférentiellement environ 57% en poids par rapport au poids total de ladite composition de gel de silice amorphe ;
- de 30 à 45%, de préférence 32 à 40%, et encore plus préférentiellement environ 38% en poids par rapport au poids total de ladite composition d'agent cellulosique ;
- de 2 à 10%, de préférence 3 à 8%, et encore plus préférentiellement environ 5% en poids par rapport au poids total de ladite composition d'agent liant ; et
- de 0 à 5%, de préférence de 0,001 à 2% et encore plus préférentiellement de 0,05 à 1% en poids par rapport au poids total de ladite composition d'au moins un additif.

Selon un autre mode de réalisation particulier, la composition selon l'invention comprend :
- de 5 à 60%, de préférence de 6 à 30%, et encore plus préférentiellement de 7 à 15% en poids par rapport au poids total de ladite composition de gel de silice amorphe ;
- de 2 à 30%, de préférence de 3 à 15%, et encore plus préférentiellement de 4 à 8% en poids par rapport au poids total de ladite composition d'agent cellulosique ;
- de 2 à 10%, de préférence 3 à 8%, et encore plus préférentiellement de 3 à 6% en poids par rapport au poids total de ladite composition d'agent liant; et
- de 5 à 85%, de préférence 20 à 80%, et encore plus préférentiellement de 40 à 76% en poids par rapport au poids total de ladite composition d'agent neutralisant ; et
- de 0 à 5%, de préférence de 0,001 à 2% et encore plus préférentiellement de 0,05 à 1% en poids par rapport au poids total de ladite composition d'au moins un additif, notamment un indicateur coloré. La composition selon l'invention permet d'obtenir un excellent compromis entre la capacité d'absorption des composés aqueux, la capacité d'absorption des composés organiques, la faible réactivité face aux produits chimiques, et la neutralisation des composés acido-basiques.

Est également divulgué le procédé de fabrication d'une composition solide qui comprend:
(a) au moins un gel de silice amorphe,
(b) au moins un agent cellulosique, et
(c) au moins un agent liant, et
(d) éventuellement un agent neutralisant, et
caractérisée en ce qu'elle présente une granulométrie de 100 µm à 2 mm.

Selon un mode de réalisation particulier, la granulométrie souhaitée de ladite composition est obtenue via une granulation par voie humide.
Ainsi, selon un mode de réalisation particulier, le procédé de fabrication de ladite composition comprend une étape de granulation par voie humide du gel de silice amorphe, de l'agent cellulosique, optionnellement d'au moins un agent neutralisant et optionnellement d'au moins un additif, en présence de l'agent liant.
La granulation est un procédé d'agglomération de particules, visant à former des agglomérats plus gros, dits granulés, à l'intérieur desquels les particules originales sont encore identifiables.
Dans un mode de réalisation préféré, la granulation par voie humide est réalisée par pulvérisation dudit agent liant sur une poudre comprenant ledit gel de silice amorphe, ledit agent cellulosique, optionnellement ledit agent neutralisant et optionnellement au moins un additif et maintenue en mouvement au sein de dispositifs d'agitation tels que des tambours tournants, des lits fluidisés, des mélangeurs à grande vitesse ou autres. Le liquide, dans un premier temps, lie les particules entre elles par une combinaison de forces capillaires et visqueuses, puis des liens plus permanents sont formés après le séchage. Les propriétés des granules produites sont déterminées à la fois par le type de formulation employé et par le procédé choisi.
Ici la granulation permet d'éviter la formation de poussières, de faciliter l'écoulement lors de l'utilisation mais aussi une répartition homogène de ladite composition sur le polluant.
Dans un mode de réalisation du procédé, la granulation par voie humide est réalisée en une ou deux étapes.

Selon un mode de réalisation particulier, ledit procédé de fabrication comprend une étape de séchage et optionnellement une étape de tamisage. Plusieurs procédés de séchage peuvent être envisagés : séchage par flux d'air, par convection, par conduction, par rayonnement, par micro-ondes ou par baisse de la pression. Des combinaisons de ces différentes techniques sont également envisageables. L'étape de tamisage permet d'obtenir la granulométrie choisie pour la composition en supprimant les fines particules restantes n'ayant pas été granulées ou en supprimant les grains trop gros.
Le procédé de fabrication de cette composition repose sur les étapes suivantes (procédé indirect) :
1. Préparation dudit agent liant en solution ;
2. Mélange dudit gel de silice amorphe, dudit agent cellulosique et optionnellement dudit agent neutralisant pour obtenir une poudre homogène ;
3. Mélange dudit agent liant en solution avec ladite poudre homogène nouvellement formée ;
4. Mise à sécher du mélange humide obtenu à l'étape 3 pour évaporer le solvant ; et
5. Etape de tamisage (optionnelle).

Il est également possible de faire un procédé de fabrication plus simple (procédé direct) :
1. Mélange dudit agent liant, dudit gel de silice amorphe, dudit agent cellulosique et optionnellement dudit agent neutralisant pour obtenir une poudre homogène;
2. Ajout de solvant à ladite poudre homogène nouvellement formée ;
3. Mise à sécher dudit mélange humide pour évaporer le solvant ; et
4. Etape de tamisage (optionnelle).

Pour le procédé de granulation par voie humide, de nombreux solvants peuvent être choisis. Pour des raisons économiques et écologiques l'utilisation de l'eau est préférée.

La quantité de solvant à ajouter doit être optimisée pour obtenir une poudre homogène à la granulométrie choisie.
Plus le volume de solvant ajouté est important, plus la granulométrie sera importante, jusqu'à obtenir une pâte.
Si le volume de solvant est vraiment trop important (supérieur à 2.5 L par kg de poudre) alors une pâte homogène sera obtenue et non des granules séparées.
Plus le volume de solvant ajouté sera faible, plus la pâte sera aérée et la granulométrie du produit fini sera fine. Si le volume est vraiment trop faible (inférieur à 1 L par kg de poudre) alors tout le produit ne sera pas humidifié et une partie de la poudre ne sera pas granulée.

Dans un mode de réalisation particulier, la quantité de solvant utilisée pour le procédé de granulation par voie humide est comprise entre 1 et 2,5 L, de préférence entre 1,2 et 2,3 L et encore plus préférentiellement entre 1,5 et 2,2 L par kg de poudre.

Dans un mode de réalisation préféré, le volume de solvant à ajouter est de 1,8 Litre de solvant par kg de poudre totale.
La proportion de matières premières et de solvant et la granulométrie choisie seront adaptées à l'utilisation finale du produit.
Pour obtenir une granulométrie de 100 µm à 1 mm, la quantité de solvant nécessaire est de 1,5 L par kg de poudre.
Pour obtenir une granulométrie de 1 mm à 2 mm, la quantité de solvant nécessaire est de 2,2 L par kg de poudre.
La présente invention porte aussi sur l'utilisation de ladite composition pour absorber les déversements de peintures, de lasures, de produits chimiques tels que les acides et les bases, d'huiles, d'hydrocarbures, de solvants et de produits aqueux.

Pour une utilisation de la composition selon l'invention comme absorbant polyvalent, on utilisera, de façon non-limitative, une composition selon l'invention présentant une granulométrie de 160 µm à 355 µm. De par sa faible granulométrie, cette composition permet de d'absorber tout type de produit liquide, en particulier les produits chimiques, à faible coût et sans engendrer de réaction chimique avec le liquide à absorber ou l'environnement. En outre, cette composition permet de laisser un sol particulièrement sec et non glissant après absorption du liquide à absorber.

Pour une utilisation comme absorbant pour peinture, on utilisera, de façon non-limitative, une composition selon l'invention présentant une granulométrie de 160 µm à 1 mm. De par sa granulométrie, cette composition permet d'absorber efficacement les déversements de peinture au sein des grandes surfaces de bricolage à faible coût et sans engendrer de réaction chimique avec le liquide à absorber ou les produits chimiques utilisés classiquement dans les grandes surfaces de bricolage. En outre, cette composition est moins asséchante ce qui permet d'éviter que les peintures absorbées ne collent au sol et ne laissent une tache trop importante et difficile à enlever.

Pour une utilisation comme absorbant routier, on utilisera, de façon non-limitative, une composition selon l'invention présentant une granulométrie de 355 µm à 2 mm. De par sa granulométrie, cette composition permet d'absorber tout type de produit liquide (notamment les produits chimiques, les huiles, les produits aqueux, les hydrocarbures etc.) sans engendrer de réaction chimique avec le liquide à absorber ou l'environnement. En outre, la granulométrie choisie permet d'utiliser la composition sur routes et autoroutes.

L'invention porte également sur un procédé de dépollution mettant en œuvre la composition selon l'invention.
Le procédé selon l'invention comprend les étapes suivantes :
(1) ajouter la composition sur un liquide polluant ;
(2) attendre jusqu'à l'absorption du liquide polluant ;
(3) éventuellement, vérifier le pH du résidu obtenu à l'étape 2 ;
(4) répéter les étapes 1 à 3 jusqu'à l'absorption complète du liquide polluant et la formation d'un résidu solide ; et
(5) ramasser le résidu.
L'étape 1) peut être effectuée de différentes manières en fonction de l'échelle de pollution. Par exemple, s'il s'agit d'une pollution à l'échelle du laboratoire (de l'ordre de quelques centaines de mL), l'étape 1) peut être effectuée par un ajout de quelques dizaines de grammes de composition, autour ou sur le liquide polluant, tandis que quand il s'agit d'une pollution à une échelle plus importante (tel que renversement de camion transportant une matière première), l'étape 1) peut être effectuée par un versement, à l'aide par exemple d'un camion-benne, d'une lance de pompier, autour ou sur le liquide polluant.
Si la composition de l'invention comprend un indicateur de pH, la vérification de pH de l'étape 3) peut être faite visuellement. Les mesures nécessaires à la manipulation du résidu (port de gants, de lunettes) et aux conditions de stockage ou traitement final (hangar aéré, ensevelissement, etc.) peuvent donc être prises.
Une fois qu'un résidu solide est obtenu, le résidu est ramassé avec des moyens couramment utilisés par l'homme du métier, par exemple à l'aide d'une pelle ou par aspiration.
Dans un mode de réalisation particulier, le résidu obtenu à l'étape (5) est un résidu DIB.

L'invention sera maintenant illustrée par les exemples non limitatifs suivants.

### EXEMPLES

Dans les exemples qui suivent, les produits commerciaux suivants sont utilisés:
Tixosil 68® : gel de silice amorphe commercialisé par Solvay présentant une granulométrie moyenne de 200 µm et une masse volumique apparente de 300 kg/cm³.
Jelucel HM 300® : cellulose pure commercialisée par Jelu-Werk. L'Hypromellose Arbocel CE 2910 HE 50 LV® : polymère issu de la cellulose commercialisé par JRS.

Les données granulométriques de Jelucel HM 300® fournies par le fabricant sont exposées dans le tableau 1.

**Tableau 1**

| **Maille du tamis** | **Pourcentage massique résiduelle sur le tamis** |
|---|---|
| 32 µm | 60% |
| 100 µm | 20% |
| 300 µm | 2% |

La cellulose JELUCEL HM 300® a donc les propriétés suivantes :

**Tableau 2**

| **Taille des grains** | **Pourcentage massique** |
|---|---|
| Entre 0µm et 32µm | 40% |
| Entre 32µm et 100µm | 40% |
| Entre 100µm et 300µm | 18% |
| Supérieur à 300µm | 2% |

Jelucel HM 200® a aussi été testée. Jelucel HM 200® est plus fine et présente la granulométrie suivante :

| **Taille des grains** | **Pourcentage massique** |
|---|---|
| Entre 0µm et 32µm | 45% |
| Entre 32µm et 100µm | 42% |
| Entre 100µm et 200µm | 11% |
| Supérieur à 200µm | 2% |

### EXEMPLE 1 (utilisation de la composition solide comme absorbant polyvalent):

Une composition solide de dépollution comprenant du Tixosil 68®, du Jelucel HM 300® et de l'Hypromellose Arbocel CE 2910 HE 50 LV® dans un ratio massique de 76/19/5 et présentant une granulométrie de 160 µm à 355 µm, est préparée de la façon suivante :
1 kg de ladite composition est fabriqué via un procédé de granulation indirect (en deux temps) comme suit :
- ajout de 760 g de gel de silice amorphe Tixosil 68® dans un mélangeur,
- ajout de 190 g de cellulose Jelucel HM 300®,
- les deux composés sont mélangés jusqu'à l'obtention d'une poudre homogène,
- préparation d'une solution contenant 50 g d'hypromellose Arbocel® CE 2910 HE 50 LV dans 1,8 L d'eau à 50°C,
- homogénéisation de cette solution pour obtenir un liquide visqueux jaune translucide,
- ajout de cet agent liant en solution sur la poudre homogénéisée,
- mélange jusqu'à homogénéisation totale du solvant et de la poudre (jusqu'à l'obtention d'une pâte granulée),
- séchage du mélange à 80°C en étuve ventilée et mélange très lent pendant 24h,
- tamisage des granules par vibrations en utilisant un tamis inférieur de mailles 160 µm et un tamis supérieur de mailles 355 µm, et
- récupération de la fraction de 160 µm à 355 µm.

### Tests d'absorption

Différents tests d'absorption ont été effectués indépendamment avec les liquides à dépolluer suivants: eau, acide chlorhydrique 5N, soude 5N, huile de moteur, gasoil, éthanol à 95%, acide chlorhydrique à 37%, soude caustique à 50%, eau de javel à 13%, en utilisant la composition solide préparée ci-dessus.

Pour chaque test d'absorption, on verse la composition solide sur 1L de liquide à dépolluer jusqu'à l'absorption complète du liquide polluant et la formation d'un résidu solide. La quantité de composition solide utilisée est ensuite mesurée. Les résultats ont été reportés dans le tableau suivant :

| **Absorbant polyvalent** | |
|---|---|
| **Granulométrie** | de 160µm à 355µm |
| **Masse volumique** | 235g/L |

| **Capacité d'absorption (masse d'absorbant nécessaire pour absorber 1L de liquide) :** | |
|---|---|
| Eau | 300g |
| Acide chlorhydrique (HCl) 5N | 315g |
| Soude (NaOH) 5N | 330g |
| Huile de moteur | 360g |
| Gasoil | 280g |
| Ethanol (EtOH) 95% | 270g |
| Acide chlorhydrique 37% | 320g |
| Soude caustique 50% | 340g |
| Eau de javel 13% | 380g |

La composition utilisée a donc pour intérêt majeur d'absorber tous les liquides déversés à un coût faible. Cette composition est utilisable sur tous les liquides déversés exceptés les oxydants forts ultra concentrés). La granulométrie élevée de ladite composition permet de ne pas provoquer de gêne respiratoire pour l'utilisateur. Cette composition a un taux d'émission de poussières bien plus faible que l'absorbant Polycaptor® usuel.

### EXEMPLE 2 (utilisation de la composition comme absorbant pour peinture):

Une composition solide de dépollution comprenant du Tixosil 68®, du Jelucel HM 300® et de l'Hypromellose Arbocel CE 2910 HE 50 LV® dans un ratio massique de 57/38/5 et présentant une granulométrie de 160 µm à 1 mm, a été préparée de la façon suivante :
1 kg de ladite composition est fabriqué via un procédé de granulation direct comme suit :
- ajout de 570g de gel de silice amorphe Tixosil 68® dans un mélangeur,
- ajout de 380g de cellulose Jelucel HM 300®,
- ajout 50g d'hypromellose Arbocel CE 2910 HE 50 LV®,
- les trois composés sont mélangés jusqu'à l'obtention d'une poudre homogène,
- ajout de 1,8 L d'eau à 50°C sur cette poudre homogène, l'eau servant ainsi de solvant,
- mélange jusqu'à homogénéisation totale du solvant et de la poudre (jusqu'à l'obtention d'une pâte granulée),
- séchage sous flux d'air tout en mélangeant lentement pendant 24h,
- tamisage des granules par vibrations en utilisant un tamis inférieur de mailles 160 µm et un tamis supérieur de mailles 1 mm, et
- récupération de la fraction comprise entre 160 µm et 1 mm.

### Tests d'absorption

Différents tests d'absorption ont été effectués indépendamment avec les liquides à dépolluer suivants: eau, huile de moteur, essence, peinture acrylique, lasure, peinture alkyde polyuréthane, en utilisant la composition solide préparée ci-dessus.
Pour chaque test d'absorption, on verse la composition solide sur 1L de liquide à dépolluer jusqu'à l'absorption complète du liquide polluant et la formation d'un résidu solide. La quantité de composition solide utilisée est ensuite mesurée. Les résultats ont été reportés dans le tableau suivant :

| **Absorbant pour peinture** | |
|---|---|
| **Granulométrie** | de 160µm à 1mm |
| **Masse volumique** | 200g/L |

| **Capacité d'absorption (masse d'absorbant nécessaire pour absorber 1L de liquide) :** | |
|---|---|
| Eau | 330g |
| Huile de moteur | 345g |
| Essence | 280g |
| Peinture acrylique | 360g |
| Lasure | 440g |
| Peinture alkyde polyuréthane | 380g |

La composition utilisée a donc pour intérêt majeur d'absorber efficacement les peintures à l'eau, les peintures aux solvants et les vernis. La composition utilisée est optimisée pour permettre d'assécher efficacement la peinture ou le vernis et donc d'obtenir un sol totalement non glissant et sécurisé, tout en garantissant une absorption efficace. Cette composition est non réactive envers la grande majorité des produits chimiques vendus au grand public. La granulométrie élevée de cette composition lui permet de ne pas provoquer de gêne respiratoire pour l'utilisateur.

### EXEMPLE 3 (utilisation de la composition comme absorbant routier):

Une composition solide de dépollution comprenant du Tixosil 68®, du Jelucel HM 300® et de l'Hypromellose Arbocel CE 2910 HE 50 LV® dans un ratio massique de 76/19/5 et présentant une granulométrie de 355 µm à 2 mm, a été préparée de la façon suivante :
1 kg de ladite composition est fabriqué via un procédé de granulation direct comme suit :
- ajout de 760g de gel de silice amorphe Tixosil 68® dans un mélangeur,
- ajout de 190g de cellulose jelucel HM 300®,
- ajout de 50g d'hypromellose Arbocel CE 2910 HE 50 LV®,
- les trois composés sont mélangés jusqu'à l'obtention d'une poudre homogène,
- ajout de 2 L d'eau à 50°C en tant que solvant sur cette poudre homogène,
- mélange jusqu'à homogénéisation totale du solvant et de la poudre (jusqu'à l'obtention d'une pate granulée),
- séchage du mélange à 80°C en étuve ventilée et mélange très lent pendant 24h,
- tamisage des granules par vibrations en utilisant un tamis inférieur de mailles 355 µm et un tamis supérieur de mailles 2 mm, et
- récupération de la fraction comprise entre 355 µm et 2 mm.

### EXEMPLE 4 (utilisation de la composition comme absorbant routier spécial acide):

Une composition solide de dépollution est préparée de la même façon que dans l'exemple 3 avec la composition suivante :
- 130g de gel de silice amorphe Tixosil 68®,
- 60g de cellulose jelucel HM 300®,
- 49,7g d'hypromellose Arbocel CE 2910 HE 50 LV®,
- 560g de bicarbonate de sodium,
- 200g de carbonate de calcium,
- 0,2g de tropaeoline, et
- 0,1g de bleu de thymol.

### EXEMPLE 5 (utilisation de la composition comme absorbant routier spécial base):

Une composition solide de dépollution est préparée de la même façon que dans l'exemple 3 avec la composition suivante :
- 80g de gel de silice amorphe Tixosil 68®,
- 50g de cellulose jelucel HM 300®,
- 35,7g d'hypromellose Arbocel CE 2910 HE 50 LV®,
- 441g de bicarbonate de sodium,
- 393g de glycine,
- 0,2g de tropaeoline, et
- 0,1g de bleu de thymol.

### EXEMPLE 6 (utilisation de la composition comme absorbant routier spécial base):

Une composition solide de dépollution est préparée de la même façon que dans l'exemple 3 avec la composition suivante :
- 150g de gel de silice amorphe Tixosil 68®,
- 62,5g de cellulose jelucel HM 300®,
- 37,2g d'hypromellose Arbocel CE 2910 HE 50 LV®,
- 187,5 g de bicarbonate de sodium,
- 562,5g de citrate de sodium monobasique,
- 0,2g de tropaeoline, et
- 0,1g de bleu de thymol.

### Tests d'absorption

Différents tests d'absorption ont été effectués indépendamment avec les liquides suivants: eau, acide chlorhydrique à 5N, soude à 5N, huile de moteur, essence, en utilisant la composition préparée à l'exemple 3.

Pour chaque test d'absorption, on verse la composition solide sur 1L de liquide à dépolluer jusqu'à l'absorption complète du liquide polluant et la formation d'un résidu solide. La quantité de composition solide utilisée est ensuite mesurée. Les résultats ont été reportés dans le tableau suivant :

| **Absorbant routier (Exemple 3)** | |
|---|---|
| **Granulométrie** | de 355µm à 2mm |
| **Masse volumique** | 166 g/L |

| **Capacité d'absorption (masse d'absorbant nécessaire pour absorber 1L de liquide) :** | |
|---|---|
| Eau | 330g |
| Acide chlorhydrique 5N | 330g |
| Soude 5N | 330g |
| Huile de moteur | 400g |
| Essence | 300g |

Cette composition de dépollution peut être utilisée en milieu extérieur. Sa granulométrie élevée la rend moins sensible aux éléments extérieurs tels que le vent et n'occasionnera aucune formation de poussières lors de son utilisation et donc aucune gêne respiratoire pour son utilisateur. Elle est utilisable sur tous les liquides déversés exceptés les oxydants forts ultra concentrés.

On effectue également des tests d'absorption comme décrit précédemment avec l'absorbant routier spécial acide de l'exemple 4. Pour ces tests, on mesure la masse d'absorbant nécessaire pour absorber 1L d'acide chlorhydrique 5N.
On obtient de bons résultats.
Le résidu formé après absorption de l'acide chlorhydrique 5N se colore en jaune de façon irréversible. On obtient donc un résidu DIB.

On effectue également des tests d'absorption comme décrit précédemment avec l'absorbant routier spécial base de l'exemple 5. Pour ces tests, on mesure la masse d'absorbant nécessaire pour absorber 1L de soude 5N.
On obtient de bons résultats.
Le résidu formé après absorption de la soude 5N se colore en jaune de façon irréversible. On obtient donc un résidu DIB.

On effectue également des tests d'absorption comme décrit précédemment avec l'absorbant routier spécial base de l'exemple 6. Pour ces tests, on mesure la masse d'absorbant nécessaire pour absorber 1L de soude 5N.
On obtient de bons résultats.
Le résidu formé après absorption de la soude 5N se colore en jaune de façon irréversible. On obtient donc un résidu DIB.

### EXEMPLE 7 (Comparaison avec la Sépiolite et Unisafe®)

A des fins comparatives, différents tests d'absorption ont été effectués indépendamment avec les liquides polluants suivants: HCl 37%, soude caustique 50%, eau, eau de javel 13%, HCl 5N, NaOH 5N et EtOH, en utilisant d'une part la composition de l'exemple 1 et d'autre part, avec la sépiolite et Unisafe®, selon le protocole suivant :
1) 1L de liquide à dépolluer est mis dans un récipient en verre ;
2) 5 g de la composition est ajoutée dans ledit récipient. Une fois le mélange homogénéisé, l'état (liquide ou solide) du mélange est vérifié ;
3) Les étapes 1) et 2) sont répétées jusqu'à l'obtention d'un résidu solide ; et
4) Une fois un résidu solide est obtenu, ledit résidu est ramassé à la pelle.
Les résultats du test d'absorption sont présentés dans le tableau suivant :

| | **Capacité d'absorption (masse d'absorbant nécessaire pour absorber 1L de liquide)** | | | | | | |
|---|---|---|---|---|---|---|---|
| | HCl 37% | Soude caustique 50% | Eau | Eau de javel 13% | HCl 5N | NaOH 5N | EtOH |
| Composition de l'exemple 1 | 320g | 340g | 300g | 380g | 315g | 330g | 270g |
| Sépiolite | 1480g | 1360g | 800g | 1680g | 940g | 960g | 1340g |
| Unisafe® | 660g | 540g | 300g | 600g | 600g | 360g | 760g |

Il est a noter que quels que soient les polluants et leurs concentrations, les compositions de la présente invention ont montré une meilleure efficacité d'absorption que les produits actuellement commercialisés.
Par ailleurs, le coût de traitement à l'aide de la composition selon l'invention par rapport au coût de traitement à l'aide des compositions actuellement commercialisées est abaissé considérablement.

En conclusion, la composition permet d'absorber différents polluants liquides à différentes concentrations en utilisant une quantité minimum du produit et à un coût inférieur à celui des produits actuellement commercialisés. De plus, la composition n'est pas dangereuse (non toxique, non irritante, non allergisante et non écotoxique), contrairement à certains produits actuellement commercialisés. En outre, la granulométrie spécifique de la composition de la présence invention la rend moins sensible aux éléments extérieurs tels que le vent et n'occasionnera aucune formation de poussières lors de son utilisation et donc aucune gêne respiratoire pour son utilisateur. Cette composition spécifique à la granulométrie choisie permet également d'absorber les polluants plus efficacement, en laissant une couche résiduelle de liquide plus faible sur la surface polluée. En comparaison avec les produits actuellement commercialisés, la quantité de résidu formé est faible et permet donc de diminuer l'impact environnemental engendré par cette dépollution. En outre, la présente invention permet d'obtenir un résidu facile à ramasser et la surface dépolluée est moins glissante.

## Revendications

1. Composition solide comprenant:
(a) au moins un gel de silice amorphe,
(b) au moins un agent cellulosique,
(c) au moins un agent liant, et
(d) éventuellement au moins un agent neutralisant, et
**caractérisée en ce qu'**elle présente une granulométrie de 100 µm à 2 mm, l'agent cellulosique étant de la cellulose,
l'agent liant étant choisi dans le groupe constitué de l'hypromellose, du carboxyméthyl cellulose de sodium, de la polyvinylpyrrolidone, du polyéthylène glycol et de la gélatine, et leurs mélanges, et
l'agent liant étant présent en une quantité de 1 à 20% en poids par rapport au poids total de ladite composition.

2. Composition selon la revendication 1, **caractérisée en ce que** le gel de silice amorphe est présent en une quantité de 5 à 90%, de préférence de 50 à 85% et encore plus préférentiellement de 55 à 80% en poids par rapport au poids total de ladite composition.

3. Composition selon la revendication 1 ou 2, **caractérisée en ce que** l'agent cellulosique est présent en une quantité de 2 à 60%, de préférence de 10 à 55% et encore plus préférentiellement de 15 à 45% en poids par rapport au poids total de ladite composition.

4. Composition selon l'une quelconque des revendications 1 à 3, **caractérisée en ce que** l'agent liant est présent en une quantité de 2 à 10%, et préférentiellement de 3 à 8% en poids par rapport au poids total de ladite composition.

5. Composition selon l'une quelconque des revendications 1 à 4, **caractérisée en ce qu'**elle comprend en outre au moins un additif choisi parmi les agents indicateurs de pH, colorants, parfums, agents facilitant l'écoulement, agents gonflants, désintégrants et leurs mélanges.

6. Composition selon l'une quelconque des revendications 1 à 5, **caractérisée en ce qu'**elle comprend un agent neutralisant choisi dans le groupe comprenant le bicarbonate de sodium, le bicarbonate de potassium, le citrate disodique, le carbonate de calcium, le carbonate de magnésium, l'oxyde de magnésium, le citrate de sodium tel que le citrate de sodium monobasique, les acides aminés tels que la glycine ou l'acide glutamique, et leurs sels tels que le glutamate de sodium, la glutamine sodique, l'acide succinique et leurs mélanges, et de préférence le carbonate de calcium, le citrate de sodium monobasique, et leurs mélanges.

7. Composition selon l'une quelconque des revendications 1 à 6 qui comprend un agent indicateur de pH et un agent neutralisant.

8. Procédé de dépollution mettant en œuvre la composition telle que définie à l'une quelconque des revendications 1 à 7 comprenant les étapes suivantes :
(1) ajouter la composition sur un liquide polluant ;
(2) attendre jusqu'à l'absorption du liquide polluant ;
(3) éventuellement, vérifier le pH du résidu obtenu à l'étape 2 ;
(4) répéter les étapes 1 à 3 jusqu'à l'absorption complète du liquide polluant et la formation d'un résidu solide ; et
(5) ramasser le résidu.

9. Utilisation de la composition telle que définie à l'une quelconque des revendications 1 à 7 pour absorber les déversements de peintures, de lasures, de produits chimiques tels que les acides et les bases, d'huiles, d'hydrocarbures, de solvants et de produits aqueux.

## Patentansprüche

1. Feste Zusammensetzung, umfassend:
(a) wenigstens ein amorphes Kieselgel,
(b) wenigstens ein Cellulosemittel,
(c) wenigstens ein Bindemittel, und
(d) gegebenenfalls wenigstens ein Neutralisationsmittel, und
**dadurch gekennzeichnet, dass** es eine Partikelgröße von 100 µm bis 2 mm aufweist,
wobei das Cellulosemittel Cellulose ist,
wobei das Bindemittel gewählt ist aus der Gruppe, umfassend Hypromellose, Natrium-Carboxymethylcellulose, Polyvinylpyrrolidon, Polyethylenglykol und Gelatine, und deren Mischungen, und
das Bindemittel in einer Menge von 1 bis 20 Gew.-%, bezogen auf das Gesamtgewicht der Zusammensetzung, vorliegt.

2. Zusammensetzung nach Anspruch 1, **dadurch gekennzeichnet, dass** das amorphe Kieselgel in einer Menge von 5 bis 90 Gew.-%, bevorzugt von 50 bis 85 Gew.-% und noch stärker bevorzugt von 55 bis 80 Gew.-%, bezogen auf das Gesamtgewicht der Zusammensetzung, vorliegt.

3. Zusammensetzung nach Anspruch 1 oder 2, **dadurch gekennzeichnet, dass** das Cellulosemittel in einer Menge von 2 bis 60 Gew.-%, bevorzugt 10 bis 55 Gew.-% und noch stärker bevorzugt 15 bis 45 Gew.-%, bezogen auf das Gesamtgewicht der Zusammensetzung, vorliegt.

4. Zusammensetzung nach einem der Ansprüche 1 bis 3, **dadurch gekennzeichnet, dass** das Bindemittel in einer Menge von 2 bis 10 Gew.-% und bevorzugt 3 bis 8 Gew.-%, bezogen auf das Gesamtgewicht der Zusammensetzung, vorliegt.

5. Zusammensetzung nach einem der Ansprüche 1 bis 4, **dadurch gekennzeichnet, dass** diese ferner wenigstens ein Additiv umfasst, gewählt aus pH-Indikatoren, Farbstoffen, Parfümen, Fließverbesserern, Treibmitteln, Sprengmittel und deren Mischungen.

6. Zusammensetzung nach einem der Ansprüche 1 bis 5, **dadurch gekennzeichnet, dass** diese ein Neutralisationsmittel umfasst, gewählt aus der Gruppe, umfassend Natriumbicarbonat, Kaliumbicarbonat, Dinatriumcitrat, Calciumcarbonat, Magnesiumcarbonat, Magnesiumoxid, Natriumcitrat wie einbasisches Natriumcitrat, Aminosäuren wie Glycin oder Glutaminsäure und ihre Salze wie Natriumglutamat, Natriumglutamin, Bernsteinsäure und deren Mischungen, und bevorzugt Calciumcarbonat, einbasisches Natriumcitrat und deren Mischungen.

7. Zusammensetzung nach einem der Ansprüche 1 bis 6, welche ein pH-Indikatormittel und ein Neutralisationsmittel umfasst.

8. Verfahren zur Dekontaminierung unter Verwendung der Zusammensetzung, wie sie in einem der Ansprüche 1 bis 7 definiert ist, umfassend die folgenden Schritte:
(1) Zugeben der Zusammensetzung zu einer verschmutzenden Flüssigkeit;
(2) Warten, bis die verschmutzende Flüssigkeit absorbiert ist;
(3) gegebenenfalls Prüfen des pH-Wertes des in Schritt 2 erhaltenen Rückstands;
(4) Wiederholen der Schritte 1 bis 3, bis die verschmutzende Flüssigkeit vollständig absorbiert und ein fester Rückstand gebildet ist; und
(5) Aufnehmen des Rückstands.

9. Verwendung der Zusammensetzung, wie in einem der Ansprüche 1 bis 7 definiert, zum Absorbieren von verschütteten Farben, Lasuren, Chemikalien wie Säuren und Basen, Ölen, Kohlenwasserstoffen, Lösungsmitteln und wässrigen Produkten.

## Claims

1. Solid composition comprising:
(a) at least one amorphous silica gel,
(b) at least one cellulose agent,
(c) at least one binding agent, and
(d) optionally at least one neutralising agent, and
**characterized in that** it has a granulometry ranging from 100 µrn to 2 mm,
the cellulose agent being cellulose,
the binding agent being chosen from hypromellose, sodium carboxymethyl cellulose; polyvinylpyrrolidone, polyethylene glycol and gelatine, and mixtures thereof, and
the binding agent being present in a quantity of between 1 and 20% by weight of the total weight of said composition.

2. Composition according to claim 1, **characterized in that** the amorphous silica gel is present in a quantity of between 5 and 90%, preferably between 50 and 85% and even more preferably between 55 and 80% by weight of the total weight of said composition.

3. Composition according to claim 1 or 2, **characterized in that** the cellulose agent is present in a quantity of between 2 and 60%, preferably between 10 and 55% and even more preferably between 15 and 45% by weight of the total weight of said composition.

4. Composition according to any one of claims 1 to 3, **characterized in that** the binding agent is present in a quantity of between 2 and 10%, and preferably between 3 and 8% by weight of the total weight of said composition.

5. Composition according to any one of claims 1 to 4, **characterized in that** it also comprises at least one additive chosen from among pH indicators, dyes, perfumes, flow-facilitating agents, swelling agents, disintegrants and mixtures thereof.

6. Composition according to any one of claims 1 to 5, **characterized in that** it comprises a neutralising agent chosen from among the group comprising sodium bicarbonate, potassium bicarbonate, disodium citrate, calcium carbonate, magnesium carbonate, magnesium oxide, sodium citrate such as monobasic sodium citrate, amino acids such as glycine or glutamic acid, and their salts such as sodium glutamate, sodium glutamine, succinic acid and mixtures thereof, and preferably calcium carbonate, monobasic sodium citrate and mixtures thereof.

7. Composition according to any one of claims 1 to 6, **characterized in that** it comprises a pH indicator and a neutralising agent.

8. Depollution method using the composition as defined in any one of claims 1 to 7, comprising the following steps:
(1) add the composition on a polluting liquid;
(2) wait until the polluting liquid has been absorbed;
(3) optionally check the pH of the residue obtained in step 2;
(4) repeat steps 1 to 3 until the polluting liquid has been completely absorbed and a solid residue has been formed; and
(5) collect the residue.

9. Use of the composition as defined in any one of claims 1 to 7, to absorb spills of paint, stains, chemicals such as acids and bases, oils, hydrocarbons, solvents and aqueous products.
